# EUROPÄISCHE PATENTSCHRIFT

(11) **EP 2 643 247 B1**
(45) Veröffentlichungstag und Bekanntmachung des Hinweises auf die Patenterteilung: **05.11.2014**
(21) Anmeldenummer: 10787310.1
(22) Anmeldetag: 23.11.2010
(51) Int. Cl.: B65G 21/20, B65G 21/22, B65G 21/16

(54) **FÜHRUNGSELEMENT FÜR TRANSPORTKETTEN SOWIE FÖRDER- UND/ODER SPEICHEREINRICHTUNG MIT SOLCHEN FÜHRUNGSELEMENTEN**
GUIDING ELEMENT FOR TRANSPORT CHAINS, AND CONVEYING DEVICE AND/OR BUFFER DEVICE WITH SUCH GUIDING ELEMENTS
ÉLÉMENT DE GUIDAGE POUR CHAÎNES DE TRANSPORT ET DISPOSITIF DE TRANSPORT ET/OU DE TAMPON MUNI D'ÉLÉMENTS DE GUIDAGE DE CE TYPE

(43) Veröffentlichungstag der Anmeldung: 02.10.2013
(73) Patentinhaber: Hauni Maschinenbau AG, 21033 Hamburg (DE)
(72) Erfinder: MÜLLER, Thomas, 20259 Hamburg (DE)
(74) Vertreter: Stork Bamberger
(86) Internationale Anmeldenummer: PCT/EP2010/007279
(87) Internationale Veröffentlichungsnummer: WO 2012/069070

(56) Entgegenhaltungen:
- EP-A1- 0 931 737
- EP-A2- 2 154 089
- US-A- 2 256 005

## Beschreibung

Die Erfindung betrifft ein Führungselement, ausgebildet und eingerichtet zum seitlichen Führen einer kurvengängigen und eine horizontale Transportebene E definierenden Transportkette in Förder- und/oder Speichereinrichtungen der Tabak verarbeitenden Industrie, umfassend ein Trägerelement mit mindestens zwei an dem Trägerelement angeordneten Führungsrollen, die einzeln auf einem Achsenkörper frei drehbar um eine vertikal zur Transportebene E verlaufende Drehachse D gelagert sind, wobei Mantelflächen der Führungsrollen als Führungsfläche zum Zusammenwirken mit einer Seitenfläche der Transportkette ausgebildet sind.

Des Weiteren betrifft die Erfindung eine Förder- und/oder Speichereinrichtung zum Fördern und/oder Speichern von Produkten der Tabak verarbeitenden Industrie, umfassend einen Rahmen mit Stützkörpern zum Stützen und Tragen einer Transportkette sowie die kurvengängige und mattenartige Transportkette selbst, wobei der Transportkette mindestens in den Kurvenabschnitten Führungselemente zugeordnet sind.

Solche Führungselemente und Förder- und/oder Speichereinrichtungen kommen in der Tabak verarbeitenden Industrie zum Einsatz, um insbesondere stabförmige Produkte, wie z.B. Zigaretten, Filterstäbe oder dergleichen zu transportieren und/oder zu speichern. Dabei liegen die stabformigen Produkte im Massenstrom üblicherweise mehrlagig und queraxial auf der Transportkette. Da die Transportkette neben einem linearen Verlauf im Bereich von Umlenkungen oder dergleichen auch Kurvenabschnitte aufweist, sind Führungselemente vorgesehen, die die Transportkette insbesondere in den Kurvenabschnitten führen und somit einen störungsfreien Lauf der Transportkette und damit sicheren Transport des aus vielen Produkten gebildeten Massenstroms gewährleisten. Beim Führen kommt es zwischen der Transportkette bzw. genauer zwischen den Seitenflächen der Transportkette und dem Führungselement zu einem Kontakt, wodurch Reibung entsteht. Um die Reibung und die damit einhergehenden Nachteile, wie z.B. Verschleiß der Reibteile, reibungsinduzierte Geräuschentwicklung etc. zu vermeiden, ist es bekannt, reibungsreduzierende Maßnahmen zu ergreifen. Eine solche Maßnahme kann z.B. das Aufsprühen von Silikonöl oder vergleichbaren Stoffen sein. Dies ist jedoch in einigen Industriebereichen und insbesondere in der Tabak verarbeitenden Industrie unerwünscht, um z.B. Fleckenbildung auf Zigarettenpapier oder dergleichen zu verhindern.

Aus dem Stand der Technik sind daher auch konstruktive Weiterbildungen einfacher und bisher insbesondere statischer Führungselemente bekannt. So beschreibt die EP 2 154 089 A2 beispielsweise einen Endlosförderer, der so genannte dynamische, also zumindest bewegbare Führungselemente mit den Merkmalen des Oberbegriffes des Anspruches 1 aufweist. Einer inneren und gekrümmten Führung sind darin mehrere Rollen zugeordnet, wobei die Rollen jeweils um eine vertikale zur Transportebene E verlaufende Welle rollen. Dabei ist der Begriff "Transportebene" im Stand der Technik wie auch bei der Erfindung nicht als zweidimensionale Ebene im streng mathematischen Sinn zu verstehen, zumal die Transportkette auch eine bauliche Höhe aufweist. Vertikal bedeutet in diesem Zusammenhang und im Zusammenhang mit der Erfindung, dass die Wellen bzw. Drehachsen auch eine Ausrichtung aufweisen können, die im Wesentlichen vertikal, also auch leicht geneigt sein kann. Die aus dem Stand der Technik bekannten Lösungen weisen allesamt den Nachteil auf, dass sie bezüglich der Reibung zwischen der Transportkette und dem Führungselement nicht optimal eingestellt sind. Vielmehr kommt es im Betrieb zu störenden Laufgeräuschen der Transportkette. Die Führungsrollen weisen untereinander einen Abstand zwischen den Drehachsen auf, der so groß ist wie der Durchmesser der Führungsrollen oder größer. Die Durchmesser der Führungsrollen verhindern dabei einen geringeren Abstand. Durch die Größe des Abstandes der Führungsflächen kommt es bei der Anlage der Transportkette an die beanstandeten Führungsrollen zu Abwinklungen der Transportkette gegenüber den Führungsrollen, wodurch der Polygoneffekt verstärkt wird, der sich negativ auf das Schwingungsverhalten der Transportkette auswirkt, was sich z.B. durch Laufunruhe und Geräuschentwicklung darstellt. Ein weiterer Nachteil besteht darin, dass die bekannten Führungselemente nicht geeignet sind, die Transportketten in vertikaler Richtung zu halten. Mit anderen Worten kann die Transportkette insbesondere nach oben ausweichen, was nur durch zusätzliche (Bau-)Elemente unterbunden werden kann.

Der Erfindung liegt damit die Aufgabe zugrunde, ein reibungsoptimiertes Führungselement vorzuschlagen, das ein sicheres und stabiles Führen der Transportketten gewährleistet. Die Aufgabe besteht weiterhin darin, eine entsprechende Förder- und/oder Speichereinrichtung zu schaffen.

Diese Aufgabe wird zum einen durch ein Führungselement der eingangs genannten Art dadurch gelöst, dass jede Führungsrolle an einer Stirnseite einen kragenförmigen Begrenzungsrand aufweist, dessen Durchmesser größer ist als der Durchmesser der Führungsrollen im Bereich der Führungsflächen, wobei benachbarte Führungsrollen ihre Begrenzungsränder auf entgegen gesetzten Seiten aufweisen und verschachtelt zueinander angeordnet sind, derart, dass der Abstand A der Achsenkörper von Drehachse D zu Drehachse D kleiner ist als der Durchmesser der Führungsrollen im Bereich der Führungsflächen. Die im Wesentlichen einen zylindrischen Körper oder einen Körper mit zylindrischen Abschnitten darstellenden Führungsrollen weisen aufgrund ihrer Gestalt eine Mantelfläche oder Mantelflächenabschnitte und zwei an den freien Enden befindliche Stirnseiten auf, von denen mindestens eine mit dem über die Mantelfläche hinausragenden Rand versehen ist. Mit der kragenförmigen Begrenzungswand, also dem bordscheibenähnlichen Rand, wird in Verbindung mit der wechselseitigen Anordnung benachbarter Führungsrollen in vertikaler Richtung zur Transportebene E eine einfache und zuverlässige Begrenzung geschaffen, die ein unerwünschtes Ausweichen der Transportkette wirksam verhindert. Die verschachtelte Anordnung benachbarter Führungsrollen in der Form, dass der Abstand der Achsenkörper von Drehachse D zu Drehachse D, also der Abstand der Mittelachsen zweier benachbarter Führungsrollen, kleiner ist als der Durchmesser der Führungsrollen im Bereich der Führungsflächen, ermöglicht eine dichte Anordnung der Führungsrollen, wodurch der Polygoneffekt verringert wird. Im Übrigen schafft die Verschachtelung auf effektive Weise eine Art Selbsthemmung der Führungsrollen in Bezug auf eine vertikale Bewegung. Anders ausgedrückt verhindert das Ineinandergreifen oder Überdecken benachbarter Führungsrollen eine Vertikalbewegung der Führungsrollen, so dass auf zusätzliche Befestigungsmittel für die Führungsrollen verzichtet werden kann.

Eine zweckmäßige Weiterbildung der Erfindung zeichnet sich dadurch aus, dass die bordscheibenartigen Begrenzungsränder integraler Bestandteil der Führungsrollen sind. Die jeweils einstückig ausgebildeten Führungsrollen sind damit einfach herzustellende Einzel- und insbesondere Austauschteile.

Vorteilhafterweise sind die der Transportkette zugewandten Führungsflächen benachbarter Führungsrollen in unterschiedlichen, parallel zur Transportebene E verlaufenden Ebenen angeordnet. Diese Ausbildung ermöglicht auf einfache und besonders effektive Weise das Verschachteln benachbarter Führungsrollen, so dass die Mittel- bzw. Drehachsen M bzw. D der Führungsrollen nah zusammenrücken können, um den Polygoneffekt zu verringern.

Eine besonders bevorzugte Weiterbildung der Erfindung ist dadurch gekennzeichnet, dass jede Führungsrolle einen die Führungsfläche bildenden zylindrischen Schaft gleichen Durchmessers aufweist, dessen äußere Mantelfläche die Führungsfläche bildet und an dessen einem stirnseitigen Ende der Begrenzungsrand angeordnet ist, wobei sich der zylindrisch Schaft in vertikaler Richtung nur über die halbe Höhe einer zu führenden Seitenfläche einer Transportkette erstreckt. Diese Ausführungsform paart verbesserte Führungs- und Reibeigenschaften mit einem optimierten Schutz gegen Verschmutzungen. Durch die "geschlossene" Form der Führungsrollen können sich z.B. Tabakreste, die das Führen/Gleiten und damit die Funktionalität beeinträchtigen würden, nur schwer an den Führungsrollen absetzen.

Eine andere besonders bevorzugte Ausführungsform zeichnet sich dadurch aus, dass jede Führungsrolle mehrere axial beabstandet zueinander angeordnete und über einen Verbindungsschaft miteinander verbundene Scheiben aufweist, deren äußere Mantelflächen die Führungsflächen bilden und deren Durchmesser einerseits größer als der Durchmesser des Verbindungsschaftes und andererseits kleiner als der Durchmesser des einseitig angeordneten Begrenzungsrandes sind. Mit dieser Rippenstruktur kann die Verschachtelung besonders wirkungsvoll umgesetzt werden. Durch die Rotation der Führungsrollen und das aufeinander Abrollen bzw. aneinander Gleiten der einzelnen Scheiben benachbarter Führurigsrollen wird eine Art Selbstreinigungseffekt erzeugt, wodurch sich die Lauf- bzw. Standzeiten der Führungsrollen verbessern.

Die Aufgabe wird auch durch ein Transportförderelement mit den eingangs genannten Merkmalen dadurch gelöst, dass das Führungselement nach einem der Ansprüche 1 bis 11 ausgebildet ist. Die sich daraus ergebenden Vorteile wurden bereits im Zusammenhang mit dem Führungselement selbst erläutert, so dass zur Vermeidung von Wiederholungen auf die entsprechenden Passagen verwiesen wird.

Weitere zweckmäßige und/oder vorteilhafte Merkmale und Weiterbildungen ergeben sich aus den Unteransprüchen und der Beschreibung. Besonders bevorzugte Ausführungsformen des erfindungsgemäßen Führungselementes sowie einer Förder- und/oder Speichereinrichtung werden anhand der beigefügten Zeichnung näher erläutert. In der Zeichnung zeigt:
- Fig. 1: eine perspektivische Darstellung eines Kurvenabschnitts einer Förder- und/oder Speichereinrichtung mit einem Führungselement einer ersten Ausführungsform und ohne Transportkette,
- Fig. 2: eine perspektivische Darstellung eines Kurvenabschnitts einer Förder- und/oder Speichereinrichtung mit einem Führungselement einer weiteren Ausführungsform und ohne Transportkette,
- Fig. 3: eine perspektivische Darstellung einer ersten Ausführungsform mehrerer ein Führungselement bildender Führungsrollen,
- Fig. 4: die Ausführungsform gemäß Figur 3 in Seitenansicht,
- Fig. 5: eine perspektivische Darstellung einer weiteren Ausführungsform mehrerer ein Führungselement bildender Führungsrollen, und
- Fig. 6: die Ausführungsform gemäß Figur 5 in Seitenansicht.

Die in den Figuren gezeigten Führungselemente dienen zum Führen einer Transportkette innerhalb einer (First-in/First-out) FiFo-Speichereinrichtung für Produkte der Tabak verarbeitenden Industrie. Die Führungselemente können selbstverständlich in jeder anderen Förder- und/oder Speichereinrichtung eingesetzt sein. Die Führungselemente können selbständig oder in Kombination mit einer Förder- und/oder Speichereinrichtung verwendet werden.

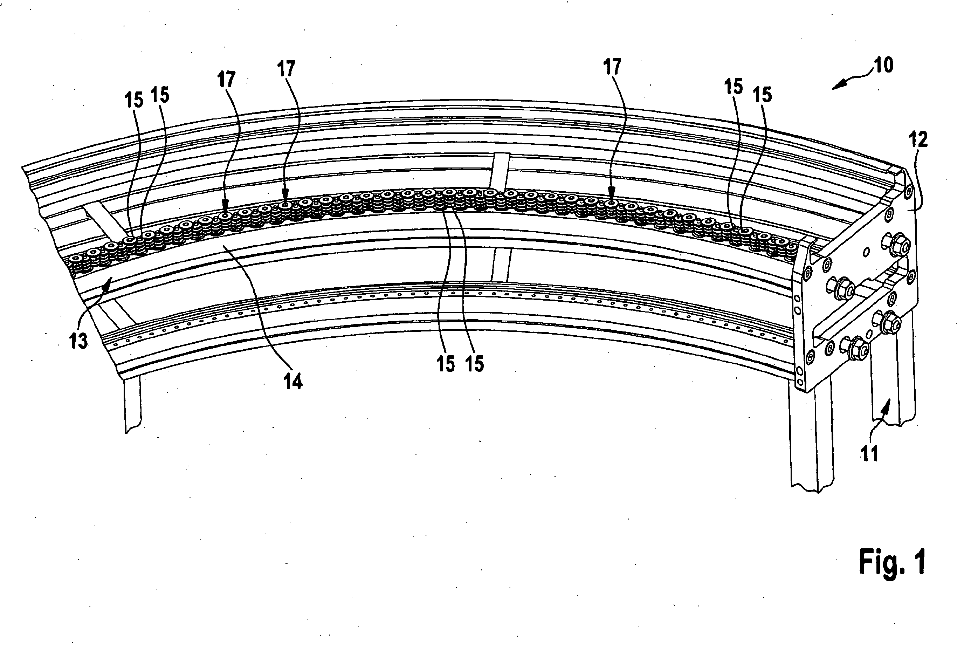

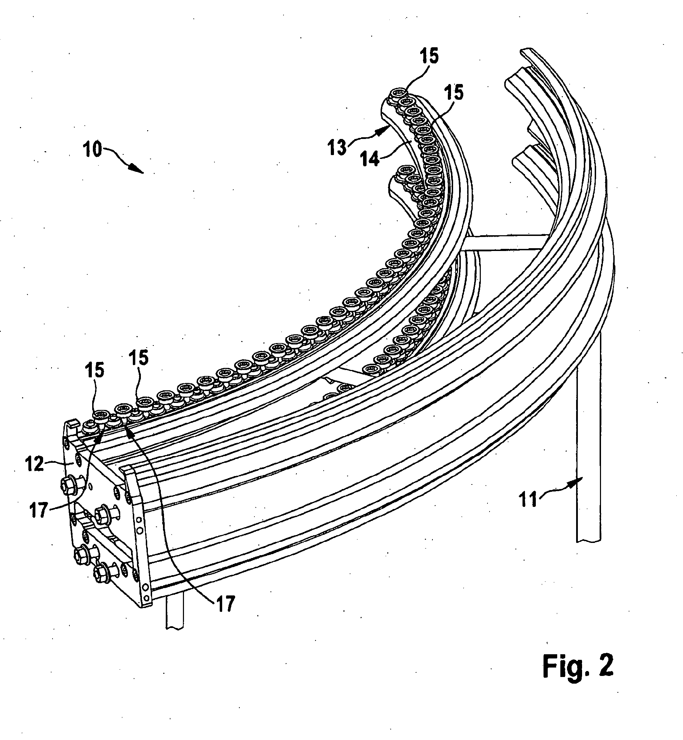

Zum besseren Verständnis der Erfindung wird zunächst anhand der Figuren 1 und 2 ein Ausschnitt einer Förder- und/oder Speichereinrichtung 10 beschrieben. Solche Förder- und/oder Speichereinrichtungen 10 sind zum Fördern und/oder Speichern eines aus Produkten der Tabak verarbeitenden Industrie gebildeten Massenstroms ausgebildet und eingerichtet. Sie umfassen einen Rahmen 11 mit Stützkörpern 12 zum Stützen und Tragen einer nicht explizit dargestellten Transportkette. Die Transportkette, die ebenfalls Bestandteil der Förder- und/oder Speichereinrichtung 10 ist, ist vorzugsweise eine mattenartige Kunststofflcette. Die Stützkörper 12 können linear oder - wie in den Ausführungsformen dargestellt - gekrümmt ausgebildet sein. In diesen Kurvenabschnitten ist dem oder jedem Stützkörper 12 ein Führungselement 13 zugeordnet, das einseitig oder beidseitig des Stützkörpers 12 angeordnet sein kann und zum seitlichen Führen der Transportkette ausgebildet und eingerichtet ist. Diese Art Förder- und Speichereinrichtungen 10 sind hinlänglich bekannt, weswegen auf eine detaillierte Beschreibung verzichtet wird. Die Stützkörper 12 und damit die Transportkette verlaufen im Wesentlichen in einer die Transportebene E definierenden, horizontalen Ebene, wobei sie zur Überwindung von Höhendifferenzen, zum Umlenken oder aus anderen verlaufsabhängigen Gründen auch geneigt angeordnet sein können.

Das oder jedes Führungselement 13 ist zum seitlichen Führen der kurvengängigen und eine horizontale Transportebene E definierenden Transportkette ausgebildet und eingerichtet, wobei der Begriff horizontal nicht -wie weiter oben bereits beschrieben - auf eine ausschließlich horizontale Ausrichtung beschränkt ist, sondern ausdrücklich auch geneigte, den Massenstrom noch tragende Ausrichtungen beinhaltet. Das Führungselement 13 umfasst in der gezeigten Ausführungsform ein gekrümmtes Trägerelement 14 mit mindestens zwei an dem Trägerelement 14 angeordneten Führungsrollen 15. Die Führungsrollen 15 bzw. deren Mantelflächen 16 sind als Kontakt- bzw. Führungsflächen zum Zusammenwirken mit einer Seitenfläche der Transportkette ausgebildet. Jede der Führungsrollen 15, die als Rotationskörper mit einem im Wesentlichen zylindrischen Grundkörper ausgebildet sind, ist auf einem Achsenkörper 17 frei drehbar gelagert, und zwar um eine vertikal zur Transportebene E verlaufende Drehachse D, die auch die Mittelachse M der Achsenkörper 17 ist.

Erfindungsgemäß weist jede Führungsrolle 15 an einer Stirnseite einen kragenförmigen Begrenzungsrand 18 auf. Der Durchmesser des Begrenzungsrandes 18 ist größer als der Durchmesser der Führungsrollen 15 im Bereich der Führungsflächen. Anders ausgedrückt steht der Begrenzungsrand 18 jeweils über die mit der Transportkette kontaktbildende Mantelfläche 16 der Führungsrollen 15 über. Benachbarte Führungsrollen 15 auf einem Trägerelement 14 sind verschachtelt zueinander angeordnet. Zum einen sind die Begrenzungsränder 18 benachbarter Führungsrollen 15 auf einander entgegen gesetzten Seiten angeordnet. Mit anderen Worten ist eine Führungsrolle 15 mit einem nach unten gerichteten Begrenzungsrand 18 auf dem Achsenkörper 17 montiert und gelagert, während die benachbarte Führungsrolle 15 mit einem nach oben gerichteten Begrenzungsrand 18 auf dem nächsten Achsenkörper 17 angeordnet ist. Die Begrenzungsränder 18 liegen also bei einem Trägerelement 14 wechselseitig oben oder unten. Zum anderen ist der Abstand benachbarter Achsenkörper 17 von Drehachse D zu Drehachse D kleiner als der Durchmesser der Führungsrollen 15 im Bereich der die Führungsflächen bildenden Mantelflächen 16.

Erfindungsgemäß sind die der Transportkette zugewandten Mantelflächen 16, die die Führungsflächen bilden, benachbarter Führungsrollen 15 in unterschiedlichen, parallel zur Transportebene E verlaufenden Ebenen angeordnet. Das bedeutet, dass die die Führungsflächen bildenden Mantelflächen 16 benachbarter Führungsrollen 15 in vertikaler Richtung versetzt zueinander sind. Die Art und Weise, also die konstruktive Lösung, wie diese Verschachtelung umgesetzt ist, kann variieren. Bevorzugte Ausgestaltungen hierzu werden weiter unten beschrieben.

Die bordscheibenartigen Begrenzungsränder 18 können als separate Elemente den Führungsrollen 15 zugeordnet sind. Vorzugsweise sind die Begrenzungsränder 18 jedoch integraler Bestandteil der Führungsrollen 15, so dass diese jeweils einstückig ausgebildet sind. Die Führungsrollen 15 können aus jedem Gleitlagerwerkstoff hergestellt sein. Vorzugsweise wird ein thermoplastischer Kunststoff, wie z.B. Polyethylenterephthalat (PET) oder ein vergleichbares Material als Werkstoff eingesetzt. Wie erwähnt, weist das Trägerelement 14 mindestens zwei Führungsrollen 15 auf. Bevorzugt sind dem Trägerelement 14 jedoch eine Vielzahl von Führungsrollen 15 zugeordnet, die gleichmäßig entlang des gekrümmten Trägerelementes 14 wahlweise fest oder lösbar an diesem befestigt sind. Beispielsweise können die Führungsrollen 15 mittels einer Nietverbindung befestigt sein. Bevorzugt ist jedoch eine einfache Steckverbindung, bei der jede Führungsrolle 15 auf einem Stift 19 aus gehärtetem Stahl gelagert ist. Die Stifte 19 wiederum können fest oder lösbar, z.B. durch eine Steckverbindung, mit dem Trägerelement 14 verbunden sein. Schraubverbindungen sowie alle anderen üblichen Verbindungstechnologien sind aber ebenfalls einsetzbar.

Das Führungselement 13 kann integraler Bestandteil des Stützkörpers 12 sein. Dann ist das Führungselement 13 bzw. das Trägerelement 14 der Stützkörper 12 selbst, so dass die Führungsrollen 15 direkt am Stützkörper 12 moniert sind. Vorzugsweise ist das Führungselement 13 jedoch als ein separates, am Stützkörper 12 lösbar zu befestigendes Teil ausgebildet. Jedes Führungselement 13 kann ein Trägerelement 14 oder mehrere Trägerelemente 14 aufweisen. Die Trägerelemente 14 können z.B. segmentweise durch eine Rastverbindung oder dergleichen am Stützkörper 12 montiert und somit leicht austauschbar sein, so dass nur Teile/Komponenten eines mehrere Trägerelemente 14 aufweisenden Führungselementes 13 ausgetauscht werden müssen. Mit anderen Worten können die Trägerelemente 14 kassettenartig ausgebildet sein, derart, dass die Trägerelemente 14 wie Schubladen herausgezogen und wieder eingesetzt werden können. Die Erfindung wurde anhand eines gekrümmten Stützkörpers 12 bzw. Führungselementes 13 beschrieben, ist jedoch selbstverständlich auch für lineare Stützkörper 12 bzw. Führungselemente 13 einsetzbar.

Die Transportkette und die Führungselemente 13 bilden eine gemeinsame Anordnung. Zwar ist das Führungselement 13 als separates Austauschteil und Nachrüstteil vorgesehen, kann jedoch wegen des Zusammenwirkens in der Funktion mit der Transportkette eine Einheit bilden. Unabhängig von den weiter unten beschriebenen unterschiedlichen Ausführungsformen der Führungsrollen 15 sind alle Führungsrollen 15 eines Führungselementes 13 jeweils identisch aufgebaut. Durch die unterschiedliche Ausrichtung, also die wechselseitige Anordnung der Führungsrollen 15 mit entgegen gesetzten Oberseiten und Unterseiten bzw. auf entgegen gesetzten Seiten liegenden Begrenzungsrändern 18 benachbarter Führungsrollen 15 entsteht die in den Figuren dargestellte, verschachtelte Anordnung der Führungsrollen 15.

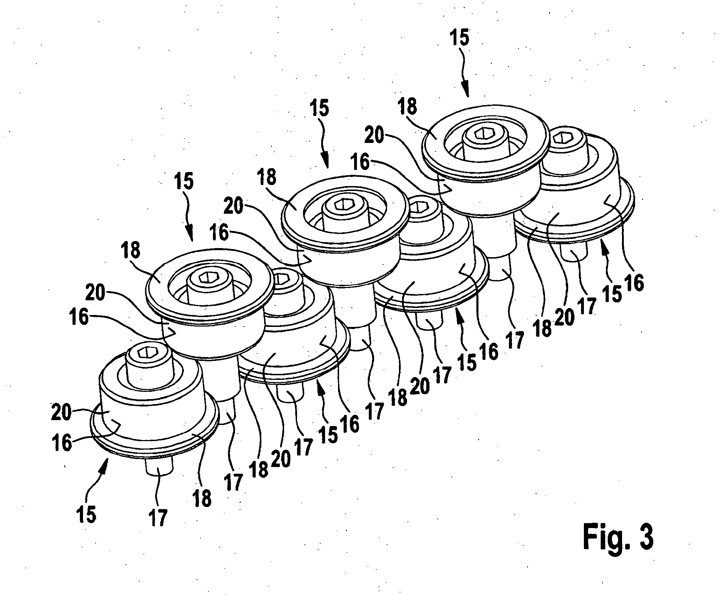

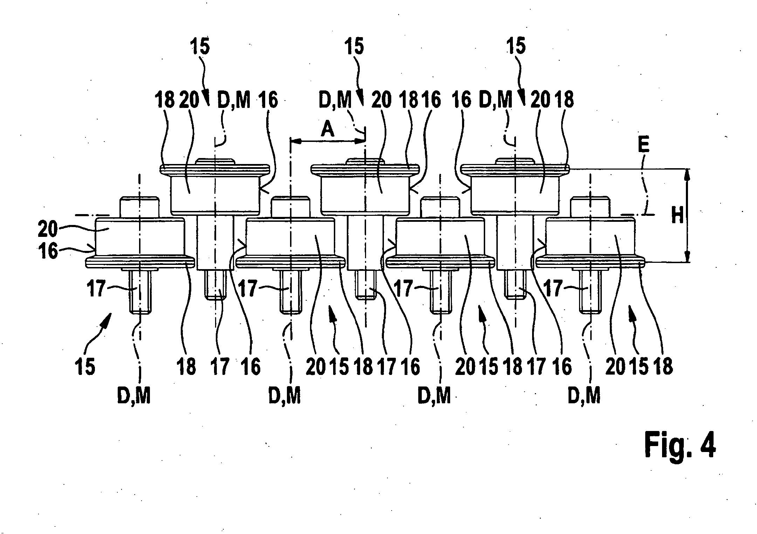

Eine erste Ausführungsform der Führungsrollen 15 ist den Figuren 3 und 4 zu entnehmen. Bei dieser Ausführungsform weist jede Führungsrolle 15 einen die Führungsfläche bildenden zylindrischen Schaft 20 gleichen Durchmessers auf. Die äußere Mantelfläche 16 bildet dabei die Führungsfläche. An einem stirnseitigen Ende des Schaftes 20 ist der Begrenzungsrand 18 angeordnet. Diese einem Schienen-Laufrad ähnelnden Führungsrollen 15 erstrecken sich mit ihrem zylindrischen Schaft 20 in vertikaler bzw. axialer Richtung nur etwa über die halbe Höhe H, also H/2 der jeweils zu führenden Seitenfläche der Transportkette, so dass die über die Mantelfläche 16 hinausragenden Begrenzungsränder 18 entweder von oben über die zu führende Transportkette ragen oder unterhalb der Transportkette eine Führung bilden. Benachbarte Führungsrollen 15 bilden somit in vertikaler Richtung eine Art Führungskorridor, so dass die Transportkette nicht nur seitlich durch die Führungsflächen sondern auch in Bezug auf die Transportebene E vertikaler Richtung geführt ist. Durch die axiale Erstreckung der Schäfte 20 über maximal die halbe Höhe H können sich benachbarte Führungsrollen 15 überlappen. Konkret liegen die Schäfte 20 benachbarter Führungsrollen 15 in unterschiedlichen Ebenen jeweils parallel zur Transportebene E. Die Führungsrollen 15 weisen mit ihren begrenzungsrandfreien Enden aufeinander zu. Allerdings ist der Abstand zwischen zwei in derselben Ebene liegenden Führungsrollen 15 geringer als der Durchmesser des Schaftes 20 der Führungsrollen 15, so dass die Schäfte 20 benachbarter Führungsrollen 15 jeweils mit ihren flachen Stirnseiten teilweise einander überlappend gegenüberliegen. Dabei stehen die zylindrischen Schäfte 20 benachbarter Führungsrollen 15 wahlweise in Kontakt miteinander oder sind mit einem geringen Abstand zueinander angeordnet. Der Übergang zwischen dem Schaft 20 und dem Begrenzungsrand 18 kann gestuft oder angefast ausgebildet sein. Auch können die Schäfte 20 an der dem Begrenzungsrand 18 gegenüber liegenden Seite angefast sein.

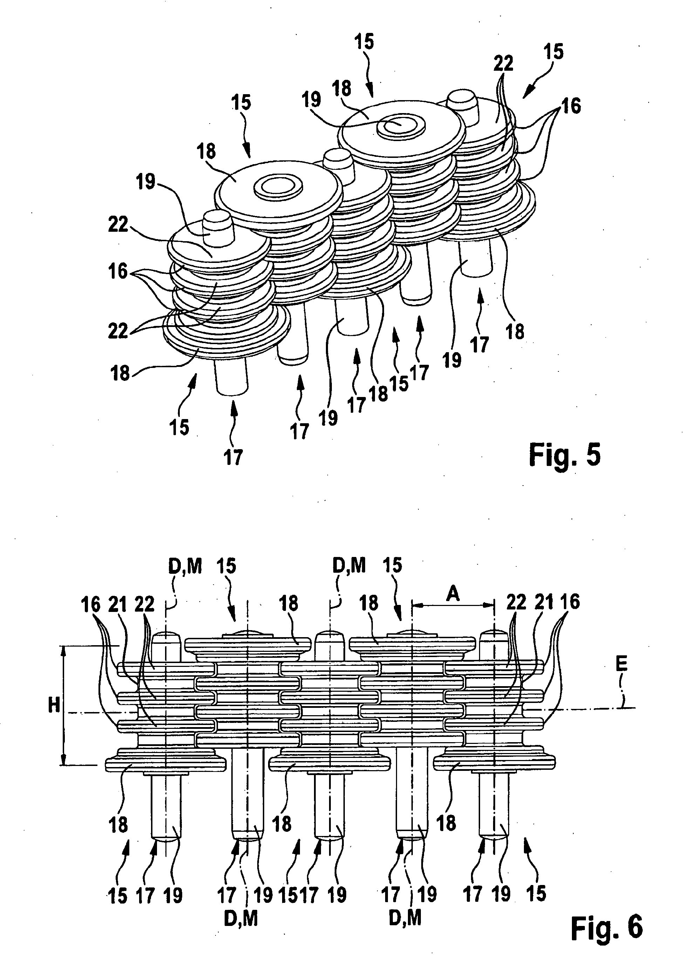

Eine weitere Ausführungsform der Führungsrollen 15 ist den Figuren 5 und 6 zu entnehmen. Bei dieser Ausführungsform weist jede Führungsrolle 15 mehrere axial beanstandet zueinander angeordnete und über einen Verbindungsschaft 21 miteinander verbundene Scheiben 22 auf. Die äußeren Mantelflächen 16 der Scheiben 22 bilden die Führungsflächen. Durch den Abstand der Scheiben 22 einer Führungsrolle 15 zueinander ist insgesamt eine unterbrochene und einer Rippenstruktur ähnelnden Mantelfläche 16 gebildet. Die Durchmesser der Scheiben 22 sind untereinander gleich groß und einerseits größer als der Durchmesser des Verbindungsschaftes 21 und andererseits kleiner als der Durchmesser des einseitig angeordneten Begrenzungsrandes 18. Durch die in vertikaler Richtung versetzte Anordnung benachbarter Führungsrollen 15 greifen die Scheiben 22 benachbarter Führungsrollen 15 ineinander, derart, dass die Scheiben 22 benachbarter Führungsrollen 15 in unterschiedlichen Ebenen liegen. Jede einzelne Scheibe 22 einer Führungsrolle 15 kann im Bereich ihrer Mantelfläche 16 einseitig oder beidseitig angefast sein. Die Scheiben 22 einer ersten Führungsrolle 15 können wahlweise berührungslos zwischen den Scheiben 22 einer benachbarten Führungsrolle 15 liegen oder in losem Kontakt zu diesen stehen, indem sie sich z.B. aufeinander abstützen. In jedem Fall ist ausreichend Spiel zwischen benachbarten Führungsrollen 15 vorgesehen, damit die Führungsrollen 15 aneinander bzw. ineinander abrollen können, was insbesondere auch einen Selbstreinigungseffekt des Führungselementes 13 bewirkt.

Wie eingangs erwähnt, sind die Führungselemente 13 üblicherweise Bestandteil einer Förder- und/oder Speichereinrichtung 10. Bei solchen Förder- und/oder Speichereinrichtungen 10 sind vorzugsweise die Kurvenabschnitte mit den oben beschriebenen Führungselementen 13 versehen. Besonders bevorzugt ist die Anordnung der Führungselemente 13 jeweils an den inneren Kurvenabschnitten. Dabei kann sich ein Führungselement 13 über den gesamten Kurvenabschnitt erstrecken. Es besteht jedoch die Möglichkeit, dass dem Kurvenabschnitt mehrere Führungselemente 13 zugeordnet sind, die das Austauschen von Komponenten erleichtern. Dazu können die Führungselemente 13 segmentweise und lösbar z.B. mittels einer Steck- oder Rastverbindung an dem jeweiligen Stützkörper 12 der Förder- und/oder Speichereinrichtung 10 befestigt sein. Durch diese kassettenartige Konstruktion der Führungselemente 13 bzw. der jeweiligen Austauschsegmente ist eine individuelle und einfache Einhandbedienung beim Austauschen gewährleistet. Zusätzlich können selbstverständlich die Führungsrollen 15 als Einzelteil austauschbar an dem jeweiligen Austauschsegment befestigt sein. In nicht gezeigten Ausführungsformen können die beschriebenen Führungselemente 13 auch Linearabschnitten zur aktiven Führungsunterstützung zugeordnet sein.

## Patentansprüche

1. Führungselement (13), ausgebildet und eingerichtet zum seitlichen Führen einer kurvengängigen und eine horizontale Transportebene (E) definierenden Transportkette in Förder- und/oder Speichereinrichtungen (10) der Tabak verarbeitenden Industrie, umfassend ein Trägerelement (14) mit mindestens zwei an dem Trägerelement (14) angeordneten Führungsrollen (15), die einzeln auf einem Achsenkörper (17) frei drehbar um eine vertikal zur Transportebene (E) verlaufende Drehachse (D) gelagert sind, wobei Mantelflächen (16) der Führungsrollen (15) als Führungsfläche zum Zusammenwirken mit einer Seitenfläche der Transportkette ausgebildet sind, **dadurch gekennzeichnet, dass** jede Führungsrolle (15) an einer Stirnseite einen kragenförmigen Begrenzungsrand (18) aufweist, dessen Durchmesser größer ist als der Durchmesser der Führungsrollen (15) im Bereich der Führungsflächen, wobei benachbarte Führungsrollen (15) ihre Begrenzungsränder (18) auf entgegen gesetzten Seiten aufweisen und verschachtelt zueinander angeordnet sind, derart, dass der Abstand (A) der Achsenkörper (17) von Drehachse (D) zu Drehachse (D) kleiner ist als der Durchmesser der Führungsrollen (15) im Bereich der Führungsflächen.

2. Führungselement nach Anspruch 1, **dadurch gekennzeichnet, dass** die bordscheibenartigen Begrenzungsränder (18) integraler Bestandteil der Führungsrollen (15) sind.

3. Führungselement nach Anspruch 1 oder 2, **dadurch gekennzeichnet, dass** die der Transportkette zugewandten Führungsflächen benachbarter Führungsrollen (15) in unterschiedlichen, parallel zur Transporteben (E) verlaufenden Ebenen angeordnet sind.

4. Führungselement nach einem der Ansprüche 1 bis 3, **dadurch gekennzeichnet, dass** die Führungsrollen (15) aus einem Gleitlagerwerkstoff hergestellt sind.

5. Führungselement nach einem der Ansprüche 1 bis 4, **dadurch gekennzeichnet, dass** dem Trägerelement (14) eine Vielzahl von Führungsrollen (15) zugeordnet sind, wobei die Führungsrollen (15) wahlweise fest oder lösbar am Trägerelement (14) befestigt sind.

6. Führungselement nach einem der Ansprüche 1 bis 5, **dadurch gekennzeichnet, dass** jede Führungsrolle (15) einen die Führungsfläche bildenden zylindrischen Schaft (20) gleichen Durchmessers aufweist, dessen äußere Mantelfläche (16) die Führungsfläche bildet und an dessen einem stirnseitigen Ende der Begrenzungsrand (18) angeordnet ist, wobei sich der zylindrisch Schaft (20) in vertikaler Richtung nur über die halbe Höhe (H) einer zu führenden Seitenfläche einer Transportkette erstreckt.

7. Führungselement nach Anspruch 6, **dadurch gekennzeichnet, dass** die zylindrischen Schäfte (20) benachbarter Führungsrollen (15) an den den Begrenzungsrändern (18) entgegen gesetzten Stirnseiten wahlweise in Kontakt zueinander stehen oder mit einem geringen Abstand zueinander angeordnet sind.

8. Führungselement nach einem der Ansprüche 1 bis 5, **dadurch gekennzeichnet, dass** jede Führungsrolle (15) mehrere axial beabstandet zueinander angeordnete und über einen Verbindungsschaft (21) miteinander verbundene Scheiben (22) aufweist, deren äußere Mantelflächen (16) die Führungsflächen bilden und deren Durchmesser einerseits größer als der Durchmesser des Verbindungsschaftes (21) und andererseits kleiner als der Durchmesser des einseitig angeordneten Begrenzungsrandes (18) sind.

9. Führungselement nach Anspruch 8, **dadurch gekennzeichnet, dass** die Scheiben (22) benachbarter Führungsrollen (15) ineinander greifen, derart, dass die Scheiben (22) benachbarter Führungsrollen (15) in unterschiedlichen Ebene liegen.

10. Führungselement nach Anspruch 8 oder 9, **dadurch gekennzeichnet, dass** die Scheiben (22) jeder Führungsrolle (15) im Bereich der Mantelfläche (16) angefast sind.

11. Führungselement nach einem der Ansprüche 8 bis 10, **dadurch gekennzeichnet, dass** die Führungsrollen (15) auf Stiften (19) aus gehärtetem Stahl gelagert sind, wobei die Stifte (19) durch eine Steckverbindung lösbar mit dem Trägerelement (14) verbunden sind.

12. Förder- und/oder Speichereinrichtung (10) zum Fördern und/oder Speichern von Produkten der Tabak verarbeitenden Industrie, umfassend einen Rahmen (11) mit Stützkörpeirn (12) zum Stützen und Tragen einer Transportkette sowie die kurvengängige und mattenartige Transportkette selbst, wobei der Transportkette mindestens in den Kurvenabschnitten Führungselemente (13) zugeordnet sind, **dadurch gekennzeichnet, dass** die Führungselemente (13) in den Kurvenabschnitten nach einem der Ansprüche 1 bis 11 ausgebildet sind.

13. Förder- und/oder Speichereinrichtung nach Anspruch 12, **dadurch gekennzeichnet, dass** die Führungselemente (13) jeweils an den inneren Kurvenabschnitten angeordnet sind.

14. Förder- und/oder Speichereinrichtung nach Anspruch 12 oder 13, **dadurch gekennzeichnet, dass** die Führungselemente (13) segmentweise und lösbar mittels einer Steck- oder Rastverbindung an den jeweiligen Stützkörpern (12) der Förder- und/oder Speichereinrichtung (10) befestigt sind.

## Claims

1. Guiding element (13), designed and equipped for lateral guiding of a conveyor chain, which is able to negotiate curves and defines a horizontal transport plane (E), in conveyor and/or storage devices (10) of the tobacco-processing industry, comprising a carrier element (14) with at least two guiding rollers (15) arranged on the carrier element (14) which are mounted individually on an axle body (17) freely rotatably about an axis of rotation (D) which runs vertically with respect to the transport plane (E), wherein circumferential surfaces (16) of the guiding rollers (15) are designed as guiding surfaces for interaction with a lateral surface of the conveyor chain, **characterised in that** each guiding roller (15) has, on a front side, a collar-shaped limiting edge (18), the diameter of which is larger than the diameter of the guiding rollers (15) in the region of the guiding surfaces, wherein adjacent guiding rollers (15) have their limiting edges (18) on opposite sides and are arranged nested in relation to one another in such a manner that the distance (A) of the axle bodies (17) from axis of rotation (D) to axis of rotation (D) is smaller than the diameter of the guiding rollers (15) in the region of the guiding surfaces.

2. Guiding element according to claim 1, **characterised in that** the flanged wheel-type limiting edges (18) are an integral component of the guiding rollers (15).

3. Guiding element according to claim 1 or 2, **characterised in that** the guiding rollers (15) adjacent to the guiding surfaces facing towards the conveyor chain are arranged in different planes running parallel to the transport plane (E).

4. Guiding element according to any one of claims 1 to 3, **characterised in that** the guiding rollers (15) are produced from a friction bearing material.

5. Guiding element according to any one of claims 1 to 4, **characterised in that** a plurality of guiding rollers (15) are assigned to the carrier element (14), wherein the guiding rollers (15) are selectively fastened fixedly or detachably to the carrier element (14).

6. Guiding element according to any one of claims 1 to 5, **characterised in that** each guiding roller (15) has a cylindrical shaft (20), which forms the guiding surface, has the same diameter and the outer circumferential surface (16) of which forms the guiding surface and on the one front side end of which the limiting edge (18) is arranged, wherein the cylindrical shaft (20) extends in the vertical direction only across half the height (H) of a lateral surface to be guided of a conveyor chain.

7. Guiding element according to claim 6, **characterised in that** the cylindrical shafts (20) of adjacent guiding rollers (15) are selectively in contact with one another or are arranged at a small distance to one another at the front sides opposite the limiting edges (18).

8. Guiding element according to any one of claims 1 to 5, **characterised in that** each guiding roller (15) has several disks (22) which are arranged axially spaced apart from one another and are connected to one another via a connecting shaft (21), the outer circumferential surfaces (16) of the disks (22) forming the guiding surfaces and the diameters of the disks (22) being on the one hand larger than the diameter of the connecting shaft (21) and on the other hand smaller than the diameter of the limiting edge (18) arranged on one side.

9. Guiding element according to claim 8, **characterised in that** the disks (22) of adjacent guiding rollers (15) engage in one another in such a manner that the disks (22) of adjacent guiding rollers (15) lie in different planes.

10. Guiding element according to claim 8 or 9, **characterised in that** the disks (22) of each guiding roller (15) are chamfered in the region of the circumferential surface (16).

11. Guiding element according to any one of claims 8 to 10, **characterised in that** the guiding rollers (15) are mounted on pins (19) composed of hardened steel, wherein the pins (19) are connected detachably to the carrier element (14) by a plug-in type connection.

12. Conveyor and/or storage device (10) for conveying and/or storing products of the tobacco-processing industry, comprising a frame (11) with support bodies (12) for supporting and carrying a conveyor chain as well as the conveyor chain itself which is able to negotiate curves and is of a mat-like form, wherein guiding elements (13) are assigned to the conveyor chain at least in the curve portions, **characterised in that** the guiding elements (13) are formed in the curve portions according to any one of claims 1 to 11.

13. Conveyor and/or storage device according to claim 12, **characterised in that** the guiding elements (13) are each arranged on the inner curve portions.

14. Conveyor and/or storage device according to claim 12 or 13, **characterised in that** the guiding elements (13) are fastened in segments and detachably by means of a plug-in or snap-lock connection to the respective support bodies (12) of the conveyor and/or storage device (10).

## Revendications

1. Élément de guidage (13), conçu et monté pour le guidage latéral d'une chaîne de transport courbe définissant un plan de transport (E) horizontal dans des dispositifs de transport et/ou de stockage (10) de l'industrie de transformation du tabac, comprenant un élément support (14) sur lequel sont agencés au moins deux galets de guidage (15) montés individuellement sur un corps d'axe (17) de manière à pouvoir tourner librement autour d'un axe de rotation (D) s'étendant verticalement par rapport au plan de transport (E), des surfaces extérieures (16) des galets de guidage (15) étant réalisées sous la forme d'une surface de guidage destinée à coopérer avec une surface latérale de la chaîne de transport, **caractérisé en ce que** chaque galet de guidage (15) comporte sur sa face frontale un bord de délimitation (18) en forme de collerette, dont le diamètre est supérieur au diamètre des galets de guidage (15) dans la zone des surfaces de guidage, les bords de délimitation (18) de galets de guidage (15) adjacents étant disposés sur des faces opposées et les galets de guidage étant agencés les uns par rapport aux autres de manière imbriquée, de telle sorte que l'écart (A) entre les corps d'axe (17) de l'axe de rotation (D) à l'axe de rotation (D) est inférieur au diamètre des galets de guidage (15) dans la zone des surfaces de guidage.

2. Élément de guidage selon la revendication 1, **caractérisé en ce que** les bords de délimitation (18) en forme de disques de rebord sont partie intégrante des galets de guidage (15).

3. Élément de guidage selon la revendication 1 ou 2, **caractérisé en ce que** les surfaces de guidage de galets de guidage (15) adjacents orientées vers la chaîne de transport sont disposées dans des plans différents s'étendant parallèlement au plan de transport (E).

4. Élément de guidage selon l'une des revendications 1 à 3, **caractérisé en ce que** les galets de guidage (15) sont réalisés dans un matériau pour paliers lisses.

5. Élément de guidage selon l'une des revendications 1 à 4, **caractérisé en ce que** sont associés à l'élément support (14) une pluralité de galets de guidage (15), les galets de guidage (15) étant fixés, au choix, de façon fixe ou amovible sur l'élément support (14).

6. Élément de guidage selon l'une des revendications 1 à 5, **caractérisé en ce que** chaque galet de guidage (15) présente un fût cylindrique (20) de même diamètre formant la surface de guidage, dont la surface extérieure (16) forme la surface de guidage et sur l'extrémité frontale duquel est disposé le bord de délimitation (18), le fût cylindrique (20) s'étendant en direction verticale uniquement sur la demi-hauteur (H) d'une surface latérale à guider d'une chaîne de transport.

7. Élément de guidage selon la revendication 6, **caractérisé en ce que** les fûts cylindriques (20) de galets de guidage (15) adjacents, sur les faces frontales opposées aux bords de délimitation (18), sont, au choix, en contact les uns avec les autres ou disposés à faible distance les uns des autres.

8. Élément de guidage selon l'une des revendications 1 à 5, **caractérisé en ce que** chaque galet de guidage (15) présente plusieurs disques (22) écartés axialement les uns des autres et reliés entre eux par l'intermédiaire d'une tige de liaison (21), dont les surfaces extérieures (16) forment les surfaces de guidage et dont les diamètres sont, d'une part, plus grands que le diamètre de la tige de liaison (21) et, d'autre part, plus petits que le diamètre du bord de délimitation (18) disposé unilatéralement.

9. Élément de guidage selon la revendication 8, **caractérisé en ce que** les disques (22) de galets de guidage (15) adjacents viennent en prise mutuellement, de telle sorte que les disques (22) de galets de guidage (15) adjacents sont situés dans des plans différents.

10. Élément de guidage selon la revendication 8 ou 9, **caractérisé en ce que** les disques (22) de chaque galet de guidage (15) sont chanfreinés dans la région de la surface extérieure (16).

11. Élément de guidage selon l'une des revendications 8 à 10, **caractérisé en ce que** les galets de guidage (15) sont montés sur des chevilles (19) en acier trempé, les chevilles (19) étant raccordées à l'élément support (14) de manière amovible par un raccord enfichable.

12. Dispositif de transport et/ou de stockage (10) pour le transport et/ou le stockage de produits de l'industrie de transformation du tabac, comprenant un cadre (11) pourvu de corps d'appui (12) pour supporter une chaîne de transport, ainsi que la chaîne de transport elle-même courbe et en forme de natte, des éléments de guidage (13) étant associés à la chaîne de transport au moins dans les parties courbes, **caractérisé en ce que** les éléments de guidage (13) dans les parties courbes sont conçus selon l'une des revendications 1 à 11.

13. Dispositif de transport et/ou de stockage selon la revendication 12, **caractérisé en ce que** les éléments de guidage (13) sont disposés respectivement sur les parties courbes intérieures.

14. Dispositif de transport et/ou de stockage selon la revendication 12 ou 13, **caractérisé en ce que** les éléments de guidage (13) sont fixés par segments et de façon amovible sur les corps d'appui (12) respectifs du dispositif de transport et/ou de stockage (10) au moyen d'un raccord à enfichage ou encliquetage.
